# EUROPÄISCHE PATENTSCHRIFT

(11) **EP 2 002 505 B1**
(45) Veröffentlichungstag und Bekanntmachung des Hinweises auf die Patenterteilung: **19.05.2010**
(21) Anmeldenummer: 07723828.5
(22) Anmeldetag: 30.03.2007
(51) Int. Cl.: H01P 1/161

(54) **HOHLLEITERÜBERGANG ZUR ERZEUGUNG ZIRKULÄR POLARISIERTER WELLEN**
WAVEGUIDE TRANSITION FOR GENERATING CIRCULARLY POLARIZED WAVES
JONCTION DE GUIDE D'ONDES POUR GÉNÉRER DES ONDES À POLARISATION CIRCULAIRE

(30) Priorität: 03.04.2006 US 788919 P; 03.04.2006 DE 102006015338
(43) Veröffentlichungstag der Anmeldung: 17.12.2008
(73) Patentinhaber: VEGA Grieshaber KG, 77709 Wolfach (DE)
(72) Erfinder: SCHULTHEISS, Daniel, 78132 Hornberg (DE); FEHRENBACH, Josef, 77716 Haslach (DE); GRIESSBAUM, Karl, 77796 Mühlenbach (DE)
(74) Vertreter: Kopf, Korbinian Paul
(86) Internationale Anmeldenummer: PCT/EP2007/002886
(87) Internationale Veröffentlichungsnummer: WO 2007/115708

(56) Entgegenhaltungen:
- EP-A- 0 350 324
- EP-A- 1 241 728
- WO-A-2005/038412
- DE-A1- 19 803 067
- JP-A- 11 186 842
- US-A- 4 737 793
- US-A1- 2004 212 529
- US-B1- 6 798 386

## Beschreibung

### Technisches Gebiet

Die vorliegende Erfindung betrifft die Füllstandmessung. Insbesondere betrifft die vorliegende Erfindung einen Hohlleiterübergang zur Erzeugung zirkular polarisierter Wellen für ein Füllstandradar, ein Mikrowellenmodul für ein Füllstandradar mit einem solchen Hohlleiterübergang, ein Füllstandradar zur Bestimmung eines Füllstands in einem Tank und die Verwendung eines derartigen Hohlleiterübergangs zur Füllstandmessung.

### Hintergrund der Erfindung

Bekannte Füllstandmessgeräte weisen neben einer Antenne zum Aussenden bzw. Empfangen von Radarwellen eine Sende- und Empfangselektronik auf, durch welche die Sendesignale erzeugt und die von der Antenne empfangenen Messsignale ausgewertet werden. Weiterhin ist eine Einkopplung vorgesehen, welche zum Einkoppeln der innerhalb des Füllstandmessgeräts generierten elektromagnetischen Wellen in einen Hohlleiter bzw. zum Auskoppeln des Empfangssignals aus dem Hohlleiter ausgeführt ist.

Zur Realisierung von planaren Einkoppelstrukturen in einem Hohlleiter kommen im Allgemeinen Verlängerungen einer Mikrostripleitung, deren offenes Ende in einen Hohlleiter hineinragt, in Betracht.

US 2004/0212529 A1 beschreibt, als nächstliegendes Dokument, eine Füllstandradarantenne mit zwei in einen Hohlleiter hineinragenden Leitungen.

EP 0 350 324 A2 beschreibt eine Satellitenantenne mit einer Hohlleitereinkopplung auf der Vorderseite eines Substrats.

JP 11186842 A beschreibt eine Satellitenantenne mit einer Leiterplatte, die in einem Gehäuse angeordnet ist.

FR-A-2722032 beschreibt eine Kopplungsvorrichtung für eine Satellitenantenne.

### Darstellung der Erfindung

DE 100 23 497 A1 offenbart eine Einkopplung in einen Hohlleiter, welche aus einer einzelnen Mikrostripleitung besteht, welche in den Hohlleiter seitlich hineinragt.

DE 198 00 306 A1 offenbart eine planares Strahlerelement (sog. Patchantenne), welche als Einzelpatch in dem Hohlleiter angeordnet wird. Die Einkopplung der elektromagnetischen Wellen in den Hohlleiter ist hierbei axial gespeist.

Zur Erzeugung zirkularer Wellen wird ein Sendesignal in gleiche Teile aufgeteilt und mit 90° Phasenversatz in beispielsweise zwei um 90° zueinander verdrehte Einkoppelstifte in einen Hohlleiter eingespeist. Erfolgt die Aufteilung des Sendesignals nicht zu jeweils der Hälfte, so ergibt sich eine elliptische Welle.

Eine solche Anordnung von zwei Einkoppelstiften, welche in den Hohlleiter hineinreichen, ist mechanisch anspruchsvoll und erfordert erhöhten Fertigungsaufwand, da die Stifte beispielsweise mechanisch am Hohlleiter fixiert werden müssen.

Es ist eine Aufgabe der vorliegenden Erfindung, eine verbesserte Einkopplung zirkular polarisierter elektromagnetischer Wellen in einem Hohlleiter bereitzustellen.

Dieser Aufgabe wird mit den Merkmalen gemäss Patentanspruchs 1 gelöst.

Gemäß einem Ausführungsbeispiel der vorliegenden Erfindung ist ein Hohlleiterübergang zur Erzeugung zirkular polarisierter Wellen für ein Füllstandradar angegeben, der Hohlleiterübergang umfassend eine erste Leitung, eine zweite Leitung und ein planares Strahlerelement, wobei die erste Leitung, die zweite Leitung und das planare Strahlerelement derart zusammenwirken, dass bei Betrieb des Füllstandradars ein Einkoppeln eines zirkular oder elliptisch polarisierten elektromagnetischen Sendesignals von den Leitungen in einen Hohlleiter erfolgt.

Die Einkopplung der zirkular oder elliptisch polarisierten Signale erfolgt demnach nicht über zwei in einem Winkel von 90° zueinander angeordneten Einkoppelstiften, sondern in Form einer planaren Einkopplung, die eine zirkular oder elliptisch polarisierte Welle in den Hohlleiter abstrahlt. Eine derartige planare Einkopplung erfordert nur relativ geringen Fertigungsaufwand, da sie beispielsweise in einer entsprechenden Leiterplatte integriert sein kann, und lässt sich leicht in einen Hohlleiter bzw. Hohlleiteranschluss einbauen.

Gemäß einem weiteren Ausführungsbeispiel der vorliegenden Erfindung umfasst der Hohlleiterübergang weiterhin einen Hohlleiteranschluss zum Anschließen eines weiterführenden Hohlleiters, einer Antenne oder einer Prozesstrennung.

Der Hohlleiterübergang kann demnach als modulares Bauteil mit einem bereits integrierten Hohlleiteranschluss gefertigt sein, an welchen dann entweder ein weiterführender Hohlleiter, oder aber direkt eine Antenne oder eine entsprechende Prozesstrennung, beispielsweise in Form eines Dielektrikums, angeschlossen werden kann.

An die beiden Leitungen kann dann die Elektronik des Füllstandradars angeschlossen werden.

Bei der Antenne kann es sich beispielsweise um eine Homantenne handeln. Natürlich sind aber auch andere Antennenformen, wie beispielsweise Stabantenne, möglich.

Gemäß der vorliegenden Erfindung ragen die beiden Leitungen in den Hohlleiteranschluss hinein.

Das abstrahlende planare Strahlerelement weist demnach einen geringeren Umfang auf, als der Hohlleiter bzw. der Hohlleiteranschluss. Typische Dicken des Strahlerelements liegen beispielsweise im Bereich unter 100 µm.

Gemäß einem weiteren Ausführungsbeispiel der vorliegenden Erfindung weist das planare Strahlerelement eine planare Struktur mit zwei senkrecht zueinander liegenden Seiten auf. Im übrigen kann das planare Strahlerelement alle bekannten Formen annehmen, wie beispielsweise Viereckform, Dreieckform, Kreissegmentform oder andere Formen.

Gemäß der vorliegenden Erfindung ist der Hohlleiterübergang zum Erzeugen eines elektromagnetischen Sendesignals mit zwei Polarisationsebenen ausgeführt, wobei die beiden Leitungen einen Winkel von 90° zueinander aufweisen können.

Gemäß einem weiteren Ausführungsbeispiel der vorliegenden Erfindung weisen die Enden der beiden Leitungen jeweils eine Verbreiterung oder eine Verschmälerung auf.

Hierdurch kann die Abstrahlcharakteristik der Leitungen variiert und optimiert werden, je nach Anwendungsfall.

Gemäß einem weiteren Ausführungsbeispiel der vorliegenden Erfindung ist das planare Strahlerelement als leitfähiges Element ausgeführt.

Beispielsweise kann das Strahlerelement aus einem Metall oder einer Metalllegierung bestehen. Auch halbleitende Materialien sind möglich.

Hierdurch ergibt sich eine Vielzahl an Variationsmöglichkeiten, so dass der Hohlleiterübergang je nach Anforderung entsprechend konfektioniert werden kann.

Gemäß einem weiteren Ausführungsbeispiel der vorliegenden Erfindung sind die Leitungen als Mikrostrip ausgeführt. Beispielsweise können die Leitungen und das planare Strahlerelement integral in einem Platinenfertigungsprozess eines Platinensubstrats ausgebildet werden. Hierdurch können die Produktionskosten weitgehend minimiert werden. Die fertige Platine kann dann auf einfache Weise als einzelnes Bauteil in den Hohlleiter eingebaut werden.

Gemäß der vorliegenden Erfindung weist das Platinensubstrat auf der zum Strahlerelement abgewandten Oberfläche eine elektrisch leitende Schicht auf, welche zum Verschließen des Hohlleiters ausgeführt ist.

Diese Art der Einkopplung benötigt demnach keinen zusätzlichen Resonanzraum im Bereich der Einkopplung, da die Leiterplatte den Hohlleiter nach hinten mit ihrer Massefläche verschließt.

Gemäß einem weiteren Ausführungsbeispiel der vorliegenden Erfindung weist das Platinensubstrat eine erste Dielektrizitätskonstante ε₁ auf. Der Hohlleiteranschluss hingegen ist mit einem Material gefüllt, das eine zweite Dielektrizitätskonstante ε₂ aufweist, wobei ε₁ größer ist als ε₂.

Auf diese Weise ist beispielsweise gewährleistet, dass die Abmessung des Strahlerelements kleiner ist als der Durchmesser des Hohlleiters. Die Füllung des Hohlleiteranschlusses mit einem Dielektrikum führt im übrigen zu einer Abdichtung des Hohlleiterübergangs, zu einer erhöhten Stabilität, besseren chemischen Beständigkeit und erhöhter Haltbarkeit.

Gemäß einem weiteren Ausführungsbeispiel der vorliegenden Erfindung ist der Hohlleiterübergang zum Einkoppeln des elektromagnetischen Sendesignals mit einer Frequenz zwischen 6 GHz und 100 GHz in dem Hohlleiter ausgeführt. Beispielsweise ist der Hohlleiterübergang für eine Frequenz von 6,3 GHz oder für eine Frequenz von 26 GHz oder für Frequenzen zwischen 77 GHz und 80 GHz ausgeführt.

Natürlich kann der Hohlleiterübergang auch verkleinert oder vergrößert werden, so dass höhere bzw. niedrigere Frequenzen verwendet werden können.

Gemäß einem weiteren Ausführungsbeispiel der vorliegenden Erfindung umfasst der Hohlleiterübergang eine erste Aussparung zum Durchführen der ersten Leitung durch den Hohlleiteranschluss und eine zweite Aussparung zum Durchführen der zweiten Leitung durch den Hohlleiteranschluss, wobei die erste Aussparung und die zweite Aussparung derart ausgeführt sind, dass sie ein elektromagnetisches Feld der darunter liegenden ersten oder zweiten Leitung nur unwesentlich beeinflussen.

Die Aussparungen sind also so groß gewählt, dass das elektromagnetische Feld nur geringfügig beeinflusst wird. Andererseits ist die Größe der Aussparungen derart festgelegt, dass nur eine gewisse Höchstenergie aus dem Hohlleiter herausgelangt, so dass eine ungewollte Abstrahlung auf die Seite limitiert ist.

Gemäß einem weiteren Ausführungsbeispiel der vorliegenden Erfindung ist ein Mikrowellenmodul für ein Füllstandradar mit einem oben beschriebenen Hohlleiterübergang angegeben.

Ein derartiges Mikrowellenmodul kann zusammen mit dem Hohlleiterübergang als modulares Bauteil in ein Füllstandradar eingebaut werden. Hierdurch verringert sich der Wartungsaufwand, da das Mikrowellenmodul als Gesamtbauteil ohne weiteres austauschbar ist.

Gemäß einem weiteren Ausführungsbeispiel der vorliegenden Erfindung ist ein Füllstandradar zur Bestimmung eines Füllstands in einem Tank angegeben, das Füllstandradar umfassend eine Antenne zum Aussenden und/oder Empfangen von elektromagnetischen Wellen und einen Hohlleiterübergang, wie er oben beschrieben ist.

Weiterhin ist die Verwendung eines oben beschriebenen Hohlleiterübergangs zur Füllstandmessung angegeben.

Weitere Ausführungsbeispiele und Vorteile der Erfindung ergeben sich aus den Unteransprüchen.

Im Folgenden werden mit Verweis auf die Figuren bevorzugte Ausführungsbeispiele der vorliegenden Erfindung beschrieben.

Fig. 1 zeigt eine schematische Darstellung eines Mikrowellenmoduls mit einem Hohlleiterübergang gemäß einem Ausführungsbeispiel der vorliegenden Erfindung.

Fig. 2 zeigt eine schematische Querschnittsdarstellung des Hohlleiterübergangs der Fig. 1.

Fig. 3 zeigt eine schematische, perspektivische Darstellung eines Hohlleiterübergangs.

Fig. 4 zeigt eine schematische Darstellung eines Füllstandradars gemäß einem Ausführungsbeispiel der vorliegenden Erfindung.

Die Darstellung in den Figuren sind schematisch und nicht maßstäblich

In der folgenden Figurenbeschreibung werden für die gleichen oder ähnlichen Elemente die gleichen Bezugsziffern verwendet.

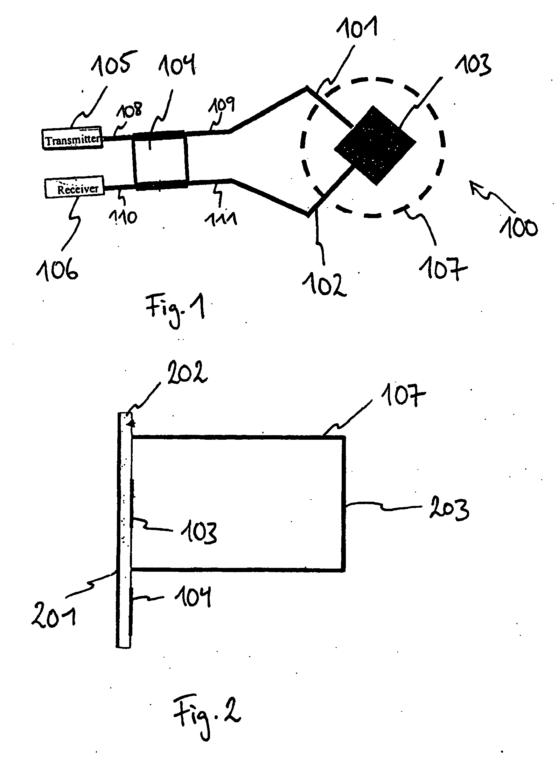

Fig. 1 zeigt eine schematische Darstellung eines Blockschaltbildes eines Mikrowellenmoduls 100 mit einem Hohlleiterübergang 101,102,103,107 gemäß einem Ausführungsbeispiel der vorliegenden Erfindung. Das Mikrowellenmodul 100 weist einen Sendepulsoszillator (Tx Oszillator) als Teil der Sendeeinheit 105 auf. Das dort erzeugte elektromagnetische Signal wird beispielsweise über einen Bandpass als Signal 108 an den Sendekoppler 104 weitergegeben.

Der Sendekoppler 104 ist beispielsweise als symmetrischer oder als unsymmetrischer Hybridkoppler ausgeführt. Das Signal 108 durchläuft den Sendekoppler 104 mit relativ geringer Dämpfung und wird als Signal 109 an eine erste Leitung 101 weitergegeben. Die erste Leitung 101 ist an das planare Strahlerelement 103 angeschlossen, welches sich innerhalb des Hohlleiteranschlusses 107 befindet.

Der Hybridkoppler 104 ist weiterhin mit einer zweiten Leitung 102 verbunden, welche ebenfalls an dem planaren Strahlerelement 103 angeschlossen ist. Über die zweite Leitung 102 ist ein zweites elektromagnetisches Signal 111 an das Strahlerelement 103 übertragbar. Das zweite elektromagnetische Signal 111 ist hierbei beispielsweise um 90° phasenverschoben zum ersten elektromagnetischen Signal 109.

Die erste Leitung 101, die zweite Leitung 102 und das planare Strahlerelement 103 wirken derart zusammen, dass bei Betrieb des Füllstandradars ein Einkoppeln eines zirkular oder elliptisch polarisierten elektromagnetischen Sendesignals von den Leitungen 101, 102 in den Hohlleiter bzw. Hohlleiteranschluss 107 erfolgt.

Der Hohlleiteranschluss 107 ist beispielsweise zum Anschließen eines weiterführenden Hohlleiters ausgeführt.

Der weiterführende Hohlleiter oder der Hohlleiteranschluss 107 ist mit einem Antennensystem (nicht dargestellt in Fig. 1) verbunden, über welches ein Messpuls ausgesendet werden kann, welcher dann von dem zu messenden Gegenstand bzw. dem zu messenden Medium (bei dem es sich beispielsweise um eine Füllgutoberfläche handelt) als Empfangssignal reflektiert wird.

Bei Verwendung zirkular polarisierter Wellen ergibt sich bei der Reflexion an einer Oberfläche die Besonderheit, dass die Drehrichtung des Feldes geändert wird. So ergibt sich beispielsweise aus einem rechtsdrehend zirkular polarisierten Sendesignal ein linksdrehend zirkular polarisiertes Empfangssignal. Das in der Drehrichtung geänderte Empfangssignal wird nachfolgend von dem Antennensystem wieder aufgenommen und führt zu zwei wiederum zueinander um 90° phasenversetzten Messsignalen 109 und 111, die an den Sendekoppler 104 übertragen werden.

Der Sendekoppler 104 gibt nun die beiden empfangenen Messsignale 109 und 111 an die Empfängerschaltung 106 als kombiniertes Signal 110 weiter.

Die Empfängerschaltung 106 weist beispielsweise einen Pulsgenerator und einen Bandpass auf, welche ein Pulssignal erzeugen und an einen ebenfalls in der Empfängerschaltung 106 enthaltenen Sampling-Mischer weiterleiten. In diesem Sampling-Mischer wird das Empfangssignal 110 von dem im Pulsgenerator der Empfängerschaltung erzeugten Pulssignal abgetastet und somit in der Zeit gedehnt. Das so erzeugte Signal wird nachfolgend durch einen Verstärker verstärkt und dann an einem entsprechenden Ausgang als ZF-Signal zur Auswertung und der Bestimmung des Füllstands zur Verfügung gestellt.

Im Bereich der Füllstandmesstechnik mit Radarsensoren bieten Systeme mit zirkular polarisierten Wellen verschiedene Vorteile. Zum einen reduziert sich die Anzahl von empfangenen Echos dadurch, dass Störreflexionen die durch 2, 4, 6 oder eine andere geradzahlige Anzahl von Reflexionen entstehen, zweimal in der Drehrichtung des Feldes geändert werden und somit am Eingang des Hybridkopplers mit einem falschen Phasenversatz anliegen. Dadurch gelangen diese Echos nicht in den Empfänger sondern zurück in den Sender, wo sie stark abgedämpft werden. Alle Echos, die 1, 3, 5 oder einer anderen ungeradzahligen Anzahl von Reflexionen unterliegen, gelangen durch die richtige Phasenbeziehung der beiden Messsignale 109 und 111 in den Empfänger. Zum anderen lässt sich die Sendeleistung eines Generators besser ausnutzen.

Bisher wird ein großer Anteil der Sendeleistung über einen Richtkoppler in einen Wellensumpf abgeleitet. Der kleinere Anteil dient als Sendesignal. Durch die Verwendung eines solchen Richtkopplers als Sende-/Empfangsweiche ergibt sich zumindest im Empfangskanal eine geringe Einfügedämpfung, im Sendezweig hingegen eine entsprechend große. Eine andere Möglichkeit ist der Einsatz eines Zirkulators, der zwar im Sendezweig sowie im Empfangszweig eine geringe Durchgangsdämpfung aufweist, allerdings recht teuer ist.

Durch die in Fig. 1 dargestellte Anordnung wird eine robuste, mechanisch stabile, leichte und einfach zu fertigende planare Einkopplung realisiert, welche eine zirkular polarisierte Welle in einen Hohlleiter abstrahlt.

Fig. 2 zeigt eine schematische Querschnittsdarstellung des in Fig. 1 dargestellten Mikrowellenmoduls mit dem erfindungsgemäßen Hohlleiterübergang. An dem Hohlleiteranschluss 107 ist eine Leiterplatte 202 angebracht, welche eine rückseitige Metallbeschichtung 201 aufweist. Auf ihrer Vorderseite weist die Platine 202 die beiden Leitungen 101, 102 (nicht zu sehen in Fig. 2), das planare Strahlerelement 103 und den Hybridkoppler 104 auf.

Diese Art der Einkopplung benötigt keinen zusätzlichen Resonanzraum im Bereich der Einkopplung, da die Leiterplatte 202 den Hohlleiter 107 nach hinten mit ihrer Massefläche 201 verschließt.

Dadurch ergibt sich ein einfacher mechanischer Aufbau des Moduls 100. Im Hohlleiter 107 müssen lediglich Aussparungen zur Durchführung der Mikrostripleitungen 101, 102 zwischen dem Hybridkoppler 104 und dem Strahlerelement 103 eingearbeitet werden. Diese Aussparungen sind beispielsweise so groß gewählt, dass sie das elektromagnetische Feld der darunter liegenden Mikrostripleitung nicht beeinflussen. Andererseits dürfen sie nicht zu groß werden, da an dieser Stelle ansonsten zu viel Energie aus dem Hohlleiter 107 herausgelangen würde, was zu einer ungewollten Abstrahlung auf die Seite führt.

Am offenen Hohlleiterende wird beispielsweise eine Hornantenne oder ein weiterer Hohlleiter (nicht dargestellt in Fig. 2) oder irgendeine Art von Prozesstrennung 203, beispielsweise durch ein Dielektrikum, angeschlossen.

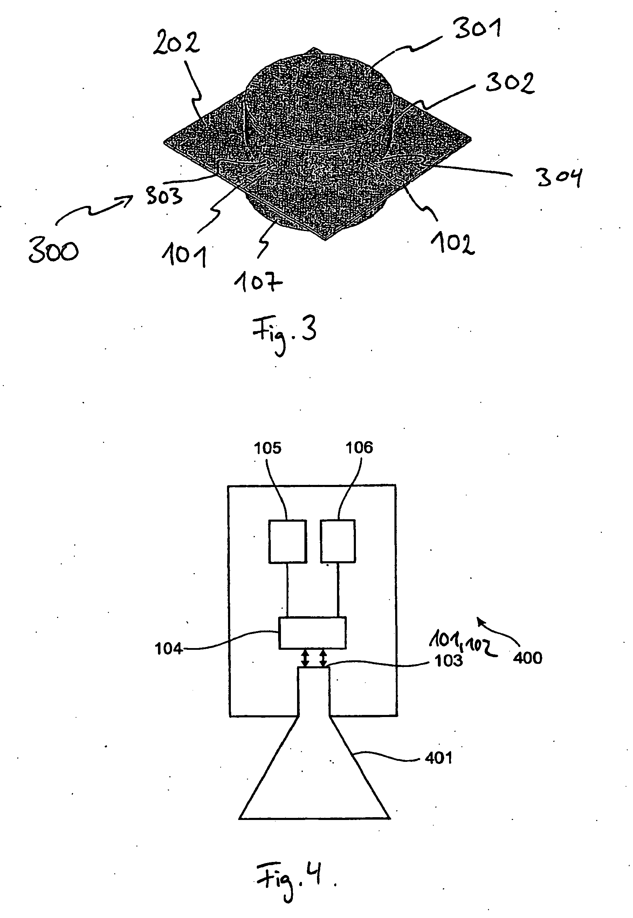

Weist die Leiterplatte 202 keine rückseitige Metallbeschichtung 201 auf (Fig. 3), kann ein Resonator mit Deckel vorgesehen sein, um den Hohlleiter 107 abzuschließen.

Fig. 3 zeigt einen Hohlleiterübergang, der nicht in den Schutzbereich des Anspruchs 1 fällt. Der Hohlleiterübergang 300 weist hierbei zwei Leitungen 101,102 auf, welche einen 90° Winkel zueinander einschließen und sich zu ihrem Ende hin verjüngen. Die beiden Leitungen 101,102 sind als Mikrostrip auf einer Leiterplatte 202 ausgeführt und reichen durch die beiden Aussparungen 303, 304 in den Hohlleiter 107, 302 hinein.

Die Leiterplatte 202 kann auch anders herum (wie in der in Fig. 2 gezeigten Konfiguration) mit der Seite, welche die Leitungen 101, 102 trägt, dem Hohlleiteranschluss 107 zugewandt installiert werden. Die Rückseite der Leiterplatte 202 kann dann mit einem leitfähigen Material beschichtet werden, so dass der Resonator 301,302 entfallen kann.

Fig. 4 zeigt eine schematische Darstellung eines Füllstandradars gemäß einem weiteren Ausführungsbeispiel der vorliegenden Erfindung.

Das Füllstandradar 400 weist hierbei eine Sendereinheit 105 und eine Empfängerschaltung 106 auf. Weiterhin ist eine Antennenvorrichtung 401 mit einem Hohlleiterübergang 101, 102, 103 vorgesehen, welcher mit einem Hybridkoppler 104 verbunden ist.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandradar (400) zur Bestimmung eines Füllstands in einem Tank, das Füllstandradar (400) aufweisend:
einen Hohlleiterübergang zum Einkoppeln eines zirkular oder elliptisch polarisierten elektromagnetischen Sendesignals in einen Hohlleiter (107), der Hohlleiterübergang umfassend:
eine erste Leitung (101) und eine zweite Leitung (102) auf einer ersten Oberfläche eines Platinensubstrats (202);
wobei die beide Leitungen (101, 102) in den Hohlleiter (107) hineinragen;
**dadurch gekennzeichnet, dass** das Platinensubstrat (202) auf der ersten Oberfläche ein planares Strahlerelement (103) umfasst, an das die beiden Leitungen (101, 102) angeschlossen sind; und
wobei das Platinensubstrat (202) auf einer zweiten, zum Strahlerelement (103) abgewandten Oberfläche eine elektrische leitende Schicht (201) aufweist zum Verschließen des Hohlleiters (107).

2. Füllstandradar nach Anspruch 1,
wobei die beiden Leitungen (101,102) im Hohlleiter (107) einen Winkel von 90 Grad zueinander aufweisen.

3. Füllstandradar nach einem der vorhergehenden Ansprüche,
wobei ein erstes Ende der ersten Leitung (101) und ein zweites Ende der zweiten Leitung (102) jeweils eine Verbreiterung oder eine Verschmälerung aufweisen.

4. Füllstandradar nach einem der vorhergehenden Ansprüche,
wobei das planare Strahlerelement (103) als leitfähiges Element ausgeführt ist.

5. Füllstandradar nach einem der vorhergehenden Ansprüche,
wobei das planare Strahlerelement (103) eine planare Struktur mit zwei senkrecht zueinander liegenden Seiten aufweist.

6. Füllstandradar nach einem der vorhergehenden Ansprüche,
wobei die Leitungen (101, 102) als Mikrostrip ausgeführt sind.

7. Füllstandradar nach einem der vorhergehenden Ansprüche,
wobei das Platinensubstrat (202) eine erste Dielektrizitätskonstante ε₁ aufweist;
wobei der Hohlleiter (107) mit einem Material gefüllt ist, das eine zweite Dielektrizitätskonstante ε₂ aufweist;
wobei ε₁ größer oder gleich ε₂ ist.

8. Füllstandradar nach einem der vorhergehenden Ansprüche,
wobei der Hohlleiterübergang zum Einkoppeln eines elektromagnetischen Sendesignals mit einer Frequenz zwischen 6 Gigahertz und 100 Gigahertz in den Hohlleiter (107) ausgeführt ist, insbesondere mit einer Frequenz von 6,3 Gigahertz oder mit 26 Gigahertz oder zwischen 77 Gigahertz und 80 Gigahertz.

9. Füllstandradar nach einem der vorhergehenden Ansprüche, weiterhin umfassend:
eine erste Aussparung (303) zum Durchführen der ersten Leitung (101) durch den Hohlleiter (107);
eine zweite Aussparung (304) zum Durchführen der zweiten Leitung (102) durch den Hohlleiter (107);
wobei die erste Aussparung (303) und die zweite Aussparung (304) derart ausgeführt sind, dass sie ein elektromagnetisches Feld der darunterliegenden ersten oder zweiten Leitung nur unwesentlich beeinflussen.

10. Füllstandradar nach einem der vorhergehenden Ansprüche, wobei der Hohlleiterübergang Teil eines Mikrowellenmoduls (100) zur Erzeugung der zirkular polarisierten Wellen ist.

11. Füllstandradar (400) nach Anspruch 1, das Füllstandradar (400) weiterhin umfassend:
eine Antenne (401) zum Aussenden und/oder Empfangen von elektromagnetischen Wellen.

12. Füllstandradar nach einem der vorhergehenden Ansprüche, wobei der Hohlleiterübergang als modulares Bauteil ausgeführt ist, an das eine Antenne, ein weiterer Hohlleiter oder eine Prozesstrennung angeschlossen werden kann.

## Claims

1. A filling level radar (400) for determining a filling level in a tank, with the filling level radar (400) comprising:
a waveguide junction for coupling a circularly or elliptically polarised electromagnetic transmission signal into a waveguide (107), with the waveguide junction comprising:
a first line (101) and a second line (102) on a first surface of a printed-circuit-board substrate (202);
wherein the two lines (101, 102) project into the waveguide (107);
**characterised in that** the printed-circuit-board substrate (202) on the first surface comprises a planar emitter element (103) to which the two lines (101,102) are connected; and
wherein the printed-circuit-board substrate (202) on a second surface, which faces away from the emitter element (103), comprises an electrically conductive layer (201) for closing off the waveguide (107).

2. The filling level radar according to claim 1,
wherein the two lines (101, 102) in the waveguide (107) comprise an angle of 90 degrees to each other.

3. The filling level radar according to one of the preceding claims,
wherein a first end of the first line (101) and a second end of the second line (102) each comprise a widening section or a narrowing section.

4. The filling level radar according to any one of the preceding claims,
wherein the planar emitter element (103) is designed as a conductive element.

5. The filling level radar according to any one of the preceding claims,
wherein the planar emitter element (103) comprises a planar structure with two sides that are arranged so as to be perpendicular to each other.

6. The filling level radar according to any one of the preceding claims,
wherein the lines (101,102) are designed as a microstrip.

7. The filling level radar according to any one of the preceding claims,
wherein the printed-circuit-board substrate (202) comprises a first dielectric constant ε₁;
wherein the waveguide (107) is filled with a material that comprises a second dielectric constant ε₂;
wherein ε₁ is larger than or equal to ε₂.

8. The filling level radar according to any one of the preceding claims,
wherein the waveguide junction is designed for coupling an electromagnetic transmission signal with a frequency of between 6 gigahertz and 100 gigahertz into the waveguide (107), in particular with a frequency of 6,3 gigahertz or 26 gigahertz, or between 77 gigahertz and 80 gigahertz.

9. The filling level radar according to any one of the preceding claims, further comprising:
a first recess (303) for feeding the first line (101) through the waveguide (107);
a second recess (304) for feeding the second line (102) through the waveguide (107);
wherein the first recess (303) and the second recess (304) are designed in such a way that their influence on an electromagnetic field of the first or second line located below them is insignificant.

10. The filling level radar according to any one of the preceding claims, wherein the waveguide junction forms part of a microwave module (100) for generating the circularly polarised waves.

11. The filling level radar (400) according to claim 1, with the filling level radar (400) further comprising:
an antenna (401) for emitting and/or receiving electromagnetic waves.

12. The filling level radar according to any one of the preceding claims, wherein the waveguide junction is designed as a modular component to which an antenna, a further waveguide or a process separation device can be connected.

## Revendications

1. Radar de niveau (400) pour la détermination d'un niveau dans un réservoir, le radar de niveau (400) présentant :
un adaptateur de guide d'ondes pour l'émission d'un signal d'émission électromagnétique, de polarisation circulaire ou elliptique, dans un guide d'ondes (107), l'adaptateur de guide d'ondes comprenant :
une première ligne (101) et une seconde ligne (102) sur une première surface d'un substrat de platine (202) ;
les deux lignes (101, 102) pénétrant dans le guide d'ondes (107) ;
**caractérisé en ce que** le substrat de platine (202) comporte sur la première surface un élément rayonnant planaire (103), auquel sont raccordées les deux lignes (101, 102) ; et
le substrat de platine (202) présentant sur une seconde surface, opposée à l'élément rayonnant (103), une couche conductrice électriquement (201) pour la fermeture du guide d'ondes (107).

2. Radar de niveau suivant la revendication 1, dans lequel les deux lignes (101, 102) présentent dans le guide d'ondes (107) un angle mutuel de 90°.

3. Radar de niveau suivant l'une des revendications précédentes, dans lequel une première extrémité de la première ligne (101) et une seconde extrémité de la seconde ligne (102) présentent chacune un élargissement ou une terminaison en pointe.

4. Radar de niveau suivant l'une des revendications précédentes, dans lequel l'élément rayonnant planaire (103) est réalisé sous forme d'élément conducteur.

5. Radar de niveau suivant l'une des revendications précédentes, dans lequel l'élément rayonnant planaire (103) présente une structure planaire avec deux côtés perpendiculaires entre eux.

6. Radar de niveau suivant l'une des revendications précédentes, dans lequel les lignes (101, 102) sont réalisées sous forme de microbande.

7. Radar de niveau suivant l'une des revendications précédentes, dans lequel
le substrat de platine (202) présente une première permittivité e₁ ;
le guide d'ondes (107) est rempli d'un matériau, qui présente une seconde permittivité e₂ ;
e₁ étant supérieure ou égale à e₂.

8. Radar de niveau suivant l'une des revendications précédentes, dans lequel l'adaptateur de guide d'ondes est réalisé pour l'injection dans le guide d'ondes (107) d'un signal d'émission électromagnétique d'une fréquence comprise entre 6 gigahertz et 100 gigahertz, en particulier d'une fréquence de 6,3 gigahertz ou de 26 gigahertz ou comprise entre 77 gigahertz et 80 gigahertz.

9. Radar de niveau suivant l'une des revendications précédentes, comprenant en outre :
un premier évidement (303) pour le passage de la première ligne (101) au travers du guide d'ondes (107) ;
un second évidement (304) pour le passage de la seconde ligne (102) au travers du guide d'ondes (107) ;
le premier évidement (303) et le second évidement (304) étant réalisés de telle sorte qu'ils n'influent sensiblement pas sur un champ électromagnétique de la première ou de la seconde ligne sous-jacentes.

10. Radar de niveau suivant l'une des revendications précédentes, dans lequel l'adaptateur de guide d'ondes fait partie d'un module à hyperfréquences (100) pour générer les ondes de polarisation circulaire.

11. Radar de niveau (400) suivant la revendication 1, le radar de niveau (400) comprenant en outre :
une antenne (401) pour l'émission et/ou la réception d'ondes électromagnétiques.

12. Radar de niveau suivant l'une des revendications précédentes, dans lequel l'adaptateur de guide d'ondes est réalisé sous forme de composant modulaire, auquel peuvent être raccordés une antenne, un autre guide d'ondes ou une interface de processus.
